# EUROPÄISCHE PATENTSCHRIFT

(11) **EP 3 429 879 B1**
(45) Veröffentlichungstag und Bekanntmachung des Hinweises auf die Patenterteilung: **11.05.2022**
(21) Anmeldenummer: 17711195.2
(22) Anmeldetag: 17.03.2017
(51) Int. Cl.: B60K 6/40, B60K 6/48, B60K 6/547, B60K 6/383, B60K 6/387, F16H 3/091, F16H 3/08

(54) **HYBRIDANTRIEBSSTRANG FÜR EIN HYBRIDGETRIEBENES KRAFTFAHRZEUG**
HYBRID POWERTRAIN FOR A HYBRID-DRIVE MOTOR VEHICLE
GROUPE MOTOPROPULSEUR HYBRIDE D'UN VÉHICULE AUTOMOBILE À PROPULSION HYBRIDE

(30) Priorität: 18.03.2016 DE 102016204586
(43) Veröffentlichungstag der Anmeldung: 23.01.2019
(73) Patentinhaber: Audi AG, 85045 Ingolstadt (DE)
(72) Erfinder: HUMMEL, Steffen, 71287 Flacht (DE)
(86) Internationale Anmeldenummer: PCT/EP2017/056376
(87) Internationale Veröffentlichungsnummer: WO 2017/158156

(56) Entgegenhaltungen:
- WO-A1-2008/138387
- DE-A1- 10 329 109
- DE-A1-102006 027 709
- DE-A1-102013 204 776
- DE-A1-102014 210 042
- DE-T5-112012 003 012

## Beschreibung

Die Erfindung betrifft einen Hybridantriebsstrang für ein hybridgetriebenes Kraftfahrzeug nach dem Oberbegriff des Patentanspruches 1.

Ein solcher Hybridantriebstrang weist neben der Brennkraftmaschine ein automatisch schaltbares Getriebe auf, das über eine Brennkraftmaschinen-Welle mit einer Brennkraftmaschine und über eine Elektromaschinen-Welle mit einer Elektromaschine verbindbar ist. Das Automatikgetriebe kann derart ausgelegt sein, dass die Elektromaschine als Starter/Generator, für ein zugkraftunterbrechungsfreies Gangstellen im Getriebe, für einen rein elektrischen Fahrbetrieb oder für einen Hybridbetrieb betreibbar ist. Bei entsprechendem Fahrerwunsch kann zudem ein Beschleunigen im Boost-Betrieb (das heißt bei erhöhter Leistungsanforderung zum Beispiel bei einem Überholvorgang) mit einem durch die Elektromaschine zusätzlich bereitgestellten Drehmoment erfolgen. In diesem Fall kann die Elektromaschine als alleinige oder als Hilfsantriebsquelle oder als Starter bzw. Generator zur Stromerzeugung und Rekuperation genutzt werden. Ein derartiger Hybridantriebsstrang ist beispielhaft aus der DE 10 2005 040 769 A1 bekannt, bei der das Getriebe aus zwei Planetenradsätzen aufgebaut ist, die über eine Vielzahl von Schaltelementen, das heißt Kupplungen und Bremsen, schaltbar sind.

Aus der DE 10 2008 047 288 A1 ist ein Hybridantriebsstrang für ein hybridgetriebenes Fahrzeug bekannt, dessen Getriebe als ein Doppelkupplungsgetriebe ausgeführt ist. In dem Getriebe sind die zur Brennkraftmaschine führende Brennkraftmaschinen-Welle und die zur Elektromaschine führende Elektromaschinen-Welle zueinander achsparallel angeordnet. Das Getriebe ist ausgangsseitig über eine Abtriebswelle mit zumindest einer Fahrzeugachse trieblich verbindbar.

Aus der DE 11 2012 003 012 T5 ist ein gattungsgemäßes Handschaltgetriebe bekannt. Aus der WO 2008/138387 A1 ist ein Verfahren zum Betrieb eines Hybridantriebssystems bekannt. Aus der DE 10 2014 210042 A1 ist eine Getriebebaugruppe und eine Antriebseinheit für einen Fahrzeug-Hybridantrieb bekannt. Aus der DE 103 29 109 A1 ist eine Vorrichtung zur Übertragung von Antriebsleistung für ein Fahrzeug bekannt. Aus der DE 10 2013 204 776 A1 ist ein Getriebe für ein Fahrzeug bekannt.

Die Aufgabe der Erfindung besteht darin, einen Hybridantriebsstrang bereitzustellen, der in einer im Vergleich zum Stand der Technik baulich einfachen, bauraumgünstigen Konstruktion größere Freiheitsgrade in der Funktionalität aufweist.

Die Aufgabe ist durch die Merkmale des Patentanspruches 1 gelöst. Bevorzugte Weiterbildungen der Erfindung sind in den abhängigen Ansprüchen offenbart.

Gemäß dem Patentanspruch 1 ist das Getriebe nicht mehr als ein Doppelkupplungsgetriebe oder mit Planetenradsätzen aufgebaut, sondern vielmehr als ein reines Stirnradgetriebe, bei dem die Brennkraftmaschinen-Welle, die Elektromaschinen-Welle und die Abtriebswelle über Stirnzahnradsätze miteinander trieblich verbindbar sind, und zwar unter kompletter Weglassung von Planetenradsätzen. Die Stirnzahnradsätze bilden Radebenen, die über die Schaltelemente schaltbar sind. Auf diese Weise wird eine einfach aufgebaute Getriebestruktur erzielt, die im Vergleich zu einem Planetengetriebe wesentlich effizienter betreibbar ist.

In einer später ausführlich beschriebenen Ausführungsvariante weist das Getriebe zum Schalten von sechs verbrennungsmotorischen Vorwärtsgängen und von drei elektromotorischen Vorwärtsgängen insgesamt sechs Synchronisierungseinheiten auf, und zwar genau vier Gangsteller, eine Freilaufkupplung sowie eine Lamellenkupplung.

Das Getriebe weist erfindungsgemäß eine zur Brennkraftmaschinen-Welle und zur Elektromaschinen-Welle achsparallele Zwischenwelle auf. Die Zwischenwelle ist über einen, eine erste Radebene RE-V4 bildenden Stirnzahnradsatz mit der Abtriebswelle verbindbar. Zusätzlich kann die Zwischenwelle über einen, eine zweite Radebene RE-E1 bildenden Stirnzahnradsatz mit der Elektromaschinen-Welle verbindbar sein und/oder über eine, eine dritte Radebene bildenden Stirnzahnradsatz mit der Elektromaschinen-Welle verbindbar sein. Zudem kann die Zwischenwelle über einen, eine vierte Radebene bildende Stirnzahnradsatz mit der Brennkraftmaschinen-Welle verbindbar sein.

Erfindungsgemäß weist die erste Radebene RE-V4 ein drehfest auf der Abtriebswelle gelagertes Zahnrad und ein damit kämmendes, drehfest auf der Zwischenwelle gelagertes Zahnrad auf. Die erste Radebene RE-V4 weist zusätzlich ein auf der Brennkraftmaschinen-Welle drehgelagertes Loszahnrad auf, das mit dem Zwischenwellen-Zahnrad kämmt und über ein Schaltelement SE-E oder SE-A mit der Brennkraftmaschinen-Welle kuppelbar ist.

Die zweite Radebene RE-E1 kann ein auf der Elektromaschinen-Welle drehfest gelagertes Zahnrad und ein damit kämmendes Zwischenwellen-Zahnrad aufweisen, das über eine Freilaufkupplung mit der Zwischenwelle kuppelbar ist. In einer technischen Ausführung kann der Freilaufkupplung ein Schaltelement SE-D zugeordnet sein, das in einer Zugbetrieb-Stellung eine Drehmomentübertragung von der Elektromaschine in Richtung auf die Zwischenwelle zulässt und in Gegenrichtung eine Freilauffunktion aufweist, das heißt die Drehmomentübertragung unterbindet. In einer Zug-/Schubbetrieb-Stellung kann das Schaltelement die Drehmomentübertragung in beide Richtung zulassen. In einer weiteren Freilauf-Stellung kann das Schaltelement dagegen die Drehmomentübertragung in beide Richtungen unterbinden.

Alternativ und/oder zusätzlich kann die dritte Radebene RE-E3 ein auf der Zwischenwelle drehgelagertes Loszahnrad aufweisen, das über ein Schaltelement SE-C mit der Zwischenwelle kuppelbar ist. Das Loszahnrad der dritten Radebene kann mit einem, auf der Elektromaschinen-Welle drehgelagerten Loszahnrad kämmen, das über ein Schaltelement, insbesondere über eine Lamellenkupplung, mit der Elektromaschinen-Welle kuppelbar ist.

Die dritte Radebene RE-E3 kann zudem ein auf der Brennkraftmaschinen-Welle drehgelagertes Loszahnrad aufweisen. Dieses kann entweder über ein Schaltelement SE-A mit dem auf der Brennkraftmaschinen-Welle gelagerten Loszahnrad der erste Radebene RE-V4 kuppelbar sein oder über ein Schaltelement SE-B mit der Brennkraftmaschinen-Welle kuppelbar sein.

Die vierte Radebene RE-V5 kann in einer Ausführungsvariante ein auf der Zwischenwelle drehgelagertes Loszahnrad aufweisen, das über ein Schaltelement SE-C mit der Zwischenwelle kuppelbar ist. Das obige Loszahnrad kann mit einem auf der Brennkraftmaschinen-Welle drehgelagerten Loszahnrad kämmen, das über ein Schaltelement SE-B mit der Brennkraftmaschinen-Welle kuppelbar ist.

Bevorzugt ist es, wenn das auf der Zwischenwelle drehgelagerte Loszahnrad der vierten Radebene RE-V5 und das auf der Zwischenwelle drehgelagerte Loszahnrad der dritten Radebene RE-E3 auf einer, auf der Zwischenwelle koaxial drehgelagerten Hohlwelle drehfest angeordnet sind. Die Hohlwelle kann über genau ein Schaltelement SE-C mit der Zwischenwelle kuppelbar sein.

Die Anzahl der im Getriebe verbauten Schaltelemente kann in der folgenden Ausführungsvariante reduziert sein: So können das oben erwähnte Schaltelement SE-A und das ebenfalls bereits erwähnte Schaltelement SE-E zu einem gemeinsamen Schaltelement SE-A zusammengefasst sein. Dieses kann in einer ersten Schaltstellung das auf der Brennkraftmaschinen-Welle drehgelagerte Loszahnrad der ersten Radebene RE-V4 mit der Brennkraftmaschine-Welle kuppeln und in einer zweiten Schaltstellung mit dem auf der Brennkraftmaschinen-Welle drehgelagerten Loszahnrad der dritten Radebene RE-E3 kuppeln.

In einer bauteilreduzierten Einbauvariante kann die Abtriebswelle als eine Ritzelwelle eines Achsdifferenzials der Fahrzeugachse ausgeführt sein. Bei einem Allradantrieb kann das auf der Zwischenwelle drehfest angeordnete Zahnrad nicht nur mit dem auf der Abtriebswelle drehfest angeordneten Zahnrad, sondern zusätzlich auch mit einem Festzahnrad einer zur zweiten Fahrzeugachse führenden Kardanwelle kämmen. Für eine Bauraumreduzierung ist es bevorzugt, wenn die Elektromaschinen-Welle als eine auf der Kardanwelle koaxial drehgelagerte Hohlwelle ausgeführt ist.

Im Hinblick auf eine einfache Realisierung eines Rückwärtsgangs kann die Elektromaschine in umgekehrter Drehrichtung betrieben werden (das heißt ein elektromotorischer Rückwärtsgang). Alternativ dazu kann das Getriebe einen, eine Rückwärtsgang-Radebene RE-VR bildenden Stirnradsatz aufweisen. In einer ersten Ausführungsform kann die Rückwärtsgang-Radebene RE-VR ein auf der Brennkraftmaschinen-Welle drehgelagertes Loszahnrad aufweisen, das über ein Schaltelement SE-R mit der Brennkraftmaschinen-Welle kuppelbar ist, und ein damit kämmendes, auf der Elektromaschinen-Welle drehgelagertes Loszahnrad aufweisen, das zusammen mit dem auf der Elektromaschinen-Welle drehgelagerten Loszahnrad drehfest auf einer Hohlwelle angeordnet ist, die auf der Elektromaschinen-Welle koaxial drehgelagert ist und mit dem Schaltelement K mit der Elektromaschinen-Welle kuppelbar ist.

Alternativ dazu kann die Rückwärtsgang-Radebene RE-VR ein drehfest auf der Brennkraftmaschinen-Welle angeordnetes Zahnrad aufweisen, das unter Zwischenschaltung eines Zwischenzahnrads mit einem auf der Zwischenwelle drehgelagerten Loszahnrad kämmt. Dieses kann über ein Schaltelement SE-C mit der auf der Zwischenwelle drehgelagerten Hohlwelle kuppelbar sein.

Alternativ dazu kann auf die Bereitstellung einer zusätzlichen Rückwärtsgang-Radebene verzichtet werden und anstelle dessen eine zur Brennkraftmaschinen-Welle achsparallele Rückwärtsgang-Welle bereitgestellt werden. Auf der Rückwärtsgang-Welle kann ein Loszahnrad drehbar gelagert sein, das mit dem auf der Zwischenwelle gelagerten Loszahnrad der zweiten Radebene RE-E1 kämmt und über ein Schaltelement SE-R mit der Rückwärtsgang-Welle kuppelbar ist. Auf der Rückwärtsgang-Welle kann zudem ein Festzahnrad angeordnet sein, das mit dem Festzahnrad der Abtriebswelle kämmt.

Im Hinblick auf eine bauraumgünstige Ausführung können sämtliche Radebenen in der Axialrichtung zwischen der Brennkraftmaschine und der Elektromaschine angeordnet sein. Insbesondere die erste Radebene RE-V4 oder alternativ die zweite Radebene RE-E1 kann auf der, der Brennkraftmaschine zugewandten Getriebeseite positioniert sein.

Das erfindungsgemäße Getriebe ist sowohl für längs eingebaute als auch für quereingebaute Antriebsstränge nutzbar. Im Quereinbau befindet sich die Elektromaschine parallel zum Radsatz. Im Längseinbau befindet sich die Elektromaschine in der Fahrzeuglängsrichtung hinter dem Getriebe im Tunnel. Zudem können mit dem Getriebe die folgenden Schaltungsarten durchgeführt werden, nämlich (einfache oder mehrfache) Hoch- oder Rückschaltungen, Zuschaltungen, Abschaltungen oder Umschaltungen. Dabei kann stets beliebig zwischen rein elektrischem oder rein verbrennungsmotorischen Betrieb sowie Hybridbetrieb geschaltet werden. Auf diese Weise stehen während einer Beschleunigungsfahrt des Fahrzeugs (zum Beispiel von 0 auf 100 km/h oder von 80 auf 120 km/h) mehrere Schaltmöglichkeiten bereit. Zudem ermöglicht das Getriebe ein Standladen, ein Laden im Kriechen (das heißt in einem Fahrzustand während der Anfahrt, bei dem die Lammellenkupplung noch im Schlupf betrieben wird) und ein Laden während der Fahrt (als eine Lastpunktanhebung) oder Rekuperation.

Mit der obigen Getriebestruktur können die elektromotorischen und verbrennungsmotorischen Vorwärtsgänge mit zwei oder vier Zahneingriffen erfolgen. Die verbrennungsmotorischen Rückwärtsgänge haben -je nach Ausführung - drei oder fünf Zahneingriffe.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert.

Es zeigen:
- Fig. 1: als Blockschaltbild ein als Stirnradgetriebe ausgeführtes Hybridgetriebe;
- Fig. 2a: eine Schaltmatrix des in der Fig. 1 gezeigten Getriebes;
- Fig. 2b: eine Schaltmatrix, aus der die elektromotorischen Stützgänge beim zugkraftunterbrechungsfreien Schalten zwischen den verbrennungsmotorischen Gängen ersichtlich sind;
- Fig. 2c: ein Diagramm, in dem ein zugkraftunterbrechungsfreier Schaltvorgang zwischen verbrennungsmotorischen Gängen veranschaulicht ist;
- Fig. 3: ein zweites Ausführungsbeispiel des in der Fig. 1 gezeigten Getriebes; und
- Fig. 4 bis 7: weitere Ausführungsbeispiele des Hybridgetriebes.

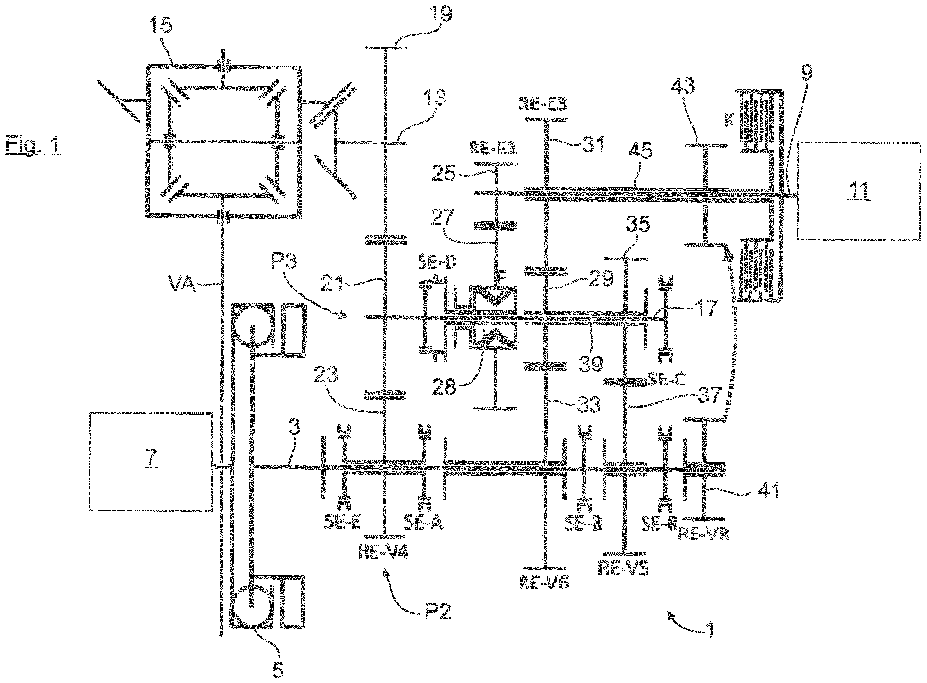

Das in der Fig. 1 gezeigte automatisch schaltbare Fahrzeuggetriebe 1 ist Bestandteil eines Hybridantriebsstranges eines nicht dargestellten hybridgetriebenen Kraftfahrzeugs. Das mittels Schaltelementen in unterschiedliche Übersetzungsstufen umschaltbare Getriebe 1 ist über eine Brennkraftmaschinen-Welle 3 mit zwischengeschaltetem Torsionsdämpfer 5 mit einer Brennkraftmaschine 7 verbunden sowie über eine Elektromaschinen-Welle 9 mit einer Elektromaschine 11 verbunden. Die Elektromaschine 11 kann für eine Drehmomentwandlung ein nicht dargestelltes Vorgelege aufweisen. Zudem ist das Getriebe 1 ausgangsseitig über eine Abtriebswelle 13 mit einer Vorderachse VA des Fahrzeugs trieblich verbunden. Die Abtriebswelle 13 steht als Ritzelwelle mit dem Kegeltrieb eines Vorderachsdifferenzials 15 in Wirkverbindung.

Wie aus der Fig. 1 weiter hervorgeht, sind die Brennkraftmaschinen-Welle 3, die Elektromaschinen-Welle 9 sowie eine zwischengeordnete Zwischenwelle 17 zueinander achsparallel angeordnet. Die Zwischenwelle 17, die Elektromaschinen-Welle 9 sowie die Abtriebswelle 13 sind über Stirnzahnradsätze miteinander trieblich verbindbar, die über die Schaltelemente schaltbar sind. Die Stirnzahnradsätze bilden zueinander parallel angeordnete Radebenen, die sich gemäß der Fig. 1 in der Axialrichtung allesamt zwischen der Brennkraftmaschine 7 und der Elektromaschine 11 befinden.

Nachfolgend ist die in der Fig. 1 gezeigte Getriebestruktur beschrieben: So ist die Zwischenwelle 17 über eine erste Radebene RE-V4 mit der Abtriebswelle 13 verbindbar und über eine zweite Radebene RE-E1 mit der Elektromaschinen-Welle 9 verbindbar. Zudem ist die Zwischenwelle 17 an einer dritten Radebene RE-E3 mit der Elektromaschinen-Welle 9 und mit der Brennkraftmaschinen-Welle 3 verbindbar und über eine vierte Radebene RE-V5 mit der Brennkraftmaschinen-Welle 3 verbindbar.

Die erste Radebene RE-V4 weist ein drehfest auf der Abtriebswelle 13 gelagertes Zahnrad 19 und ein damit kämmendes, drehfest auf der Zwischenwelle 17 gelagertes Zahnrad 21 auf. Zudem weist die erste Radebene RE-V4 ein auf der Brennkraftmaschinen-Welle 3 drehgelagertes Loszahnrad 23 auf, das mit dem Zwischenwellen-Zahnrad 21 kämmt und über ein Schaltelement SE-E mit der Brennkraftmaschinen-Welle 3 kuppelbar ist.

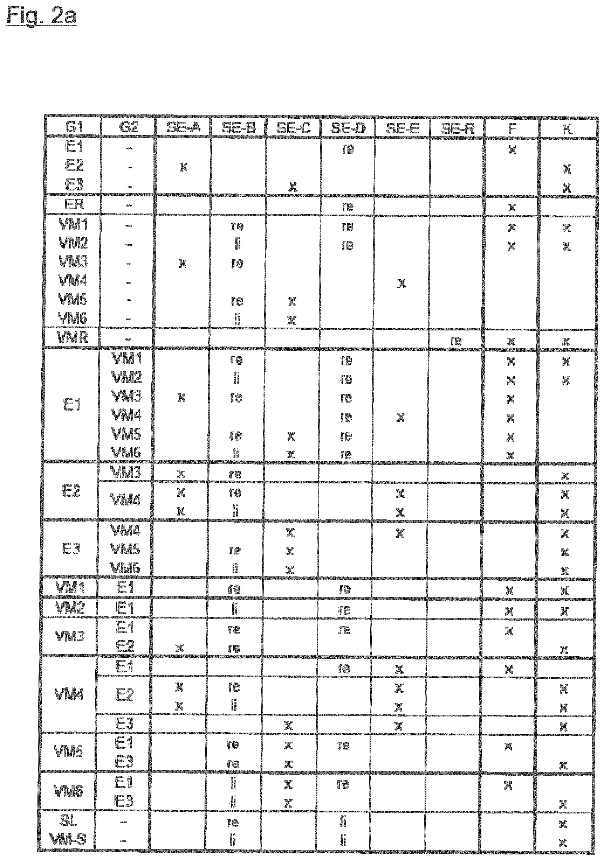

Die zweite Radebene RE-E1 weist ein auf der Elektromaschinen-Welle 9 drehfest gelagertes Zahnrad 25 und ein damit kämmendes Zwischenwellen-Zahnrad 27 auf, das über eine Freilaufkupplung F mit der Zwischenwelle 17 verbindbar ist. Der Freilaufkupplung F ist ein Schaltelement SE-D zugeordnet, das in drei Betriebsstellungen schaltbar ist: In einer ersten Zugbetriebs-Stellung (das heißt in der Schaltmatrix der Fig. 2a Mittelstellung von SE-D) ist eine Drehmomentübertragung von der Elektromaschine 11 in Richtung auf die Zwischenwelle 17 ermöglicht und in Gegenrichtung die Freilauffunktion aktiviert, das heißt eine Drehmomentübertragung unterbunden. Sofern also das Zwischenwellen-Zahnrad 27 schneller dreht als die mit der Zwischenwelle 17 gekoppelte Freilauf-Innenseite 28, treibt das Zwischenwellen-Zahnrad 27 die mit der Zwischenwelle 17 gekoppelte Freilauf-Innenseite 28 an. In einer zweiten Zug-/Schubbetriebs-Stellung (das heißt in der Schaltmatrix der Fig. 2a rechte Stellung von SE-D) ist die Drehmomentübertragung in beide Richtungen ermöglicht. In einer dritten Freilauf-Stellung (das heißt in der Schaltmatrix der Fig. 2a linke Stellung von SE-D) ist dagegen die Drehmomentübertragung in beide Richtungen unterbunden, wie es in einem später beschriebenen Standlade-Betrieb und beim Brennkraftmaschinen-Start erforderlich ist.

Die dritte Radebene RE-E3 ist aus einem auf der Zwischenwelle 17 drehgelagerten Loszahnrad 29, das über ein Schaltelement SE-C mit der Zwischenwelle 17 kuppelbar ist und aus einem damit kämmenden, auf der Elektromaschinen-Welle 9 drehgelagerten Loszahnrad 31 aufgebaut, das über eine Lamellenkupplung K mit der Elektromaschinen-Welle 9 kuppelbar ist. Die dritte Radebene RE-E3 weist zudem ein auf der Brennkraftmaschinen-Welle 3 drehgelagertes Loszahnrad 33 auf, das über ein Schaltelement SE-A mit dem auf der Brennkraftmaschinen-Welle 3 drehgelagerten Loszahnrad 23 der ersten Radebene RE-V4 kuppelbar ist oder über ein Schaltelement SE-B mit der Brennkraftmaschinen-Welle 3 kuppelbar ist.

Die vierte Radebene RE-V5 weist ein auf der Zwischenwelle 17 gelagertes Loszahnrad 35 auf, das über ein Schaltelement SE-C mit der Zwischenwelle 17 kuppelbar ist und mit einem, auf der Brennkraftmaschinen-Welle 3 drehgelagerten Loszahnrad 37 kämmt. Das Loszahnrad 37 ist über das bereits erwähnte Schaltelement SE-B mit der Brennkraftmaschinen-Welle 3 kuppelbar.

Zudem ist das auf der Zwischenwelle 17 gelagerte Loszahnrad 35 der vierten Radebene RE-V5 und das ebenfalls auf der Zwischenwelle 17 gelagerte Loszahnrad 29 der dritten Radebene RE-E3 auf einer, auf der Zwischenwelle 17 koaxial drehgelagerten Hohlwelle 39 drehfest angeordnet. Die Hohlwelle 39 ist über genau ein Schaltelement SE-C mit der Zwischenwelle 17 kuppelbar.

Wie aus der Fig. 1 weiter hervorgeht, weist das Getriebe 1 eine zusätzliche Rückwärtsgang-Radebene RE-VR auf, das aus einem auf der Brennkraftmaschinen-Welle 3 drehgelagerten Loszahnrad 41 und einem damit kämmenden, auf der Elektromaschinen-Welle 9 drehgelagerten Loszahnrad 43 aufgebaut ist. Das Loszahnrad 41 ist über ein Schaltelement SE-R mit der Brennkraftmaschinen-Welle 3 kuppelbar, während das Zahnrad 43 zusammen mit dem auf der Elektromaschinen-Welle 9 gelagerten Loszahnrad 31 der dritten Radebene RE-E3 drehfest auf einer Hohlwelle 45 angeordnet ist, die koaxial auf der Elektromaschinen-Welle 9 drehgelagert ist und über die Lamellenkupplung K mit der Elektromaschinen-Welle 9 kuppelbar ist. Bei eingelegtem Rückwärtsgang ergibt sich ein Lastpfad von der Brennkraftmaschine 7 über die Brennkraftmaschinen-Welle 3, die Rückwärtsgang-Ebene RE-VR sowie über die geschlossene Lamellenkupplung K bis zum auf der Elektromaschinen-Welle 9 gelagerten Festzahnrad 25 der zweiten Ebene RE-E1 und weiter über die Freilaufkupplung F und das Schaltelement SE-D zur ersten Radebene RE-V4. Der Rückwärtsgang ist daher als ein Verwindungsgang realisiert, der neben der Rückwärtsgang-Radebene RE-VR, die zweite Radebene RE-E1 und die erste Radebene RE-V4 nutzt.

In der Fig. 1 ist die Brennkraftmaschinen-Welle 3 frei von Zahnrädern, das heißt die Brennkraftmaschinen-Welle 3 weist kein darauf drehfest angeordnetes Zahnrad auf, sondern vielmehr lediglich zwei Synchronisierungen (bei SE-B und bei SE-R) sowie eine Kupplungsverzahnung (bei SE-E). Zudem ist in der Fig. 1 beidseitig des auf der Brennkraftmaschinen-Welle 3 drehgelagerten Loszahnrads 23 der ersten Radebene RE-V4 jeweils das Schaltelement SE-E und das Schaltelement SE-A angeordnet. Mit den beiden Schaltelementen SE-E und SE-A sind sowohl die Elektromaschine 11 als auch die Brennkraftmaschine 7 gleichzeitig an das Loszahnrad 23 der ersten Radebene RE-V4 anbindbar.

In der obigen Getriebestruktur ist die Elektromaschine 11 in unterschiedlichen Positionen (das heißt P2-Position, P3-Position) an den Antriebsstrang anbindbar: So kann die Elektromaschine 11 über einen P2-Lastpfad an einer P2-Position (das heißt antriebsnah und im Getriebe 1) an der ersten Radebene RE-V4 angebunden sein. Der P2-Lastpfad verläuft von der Elektromaschine 11 über die Elektromaschinen-Welle 9, die geschlossene Lamellenkupplung K, die Hohlwelle 45, die dritte Radebene RE-E3 und das geschlossene Schaltelement SE-A zum auf der Brennkraftmaschinen-Welle 3 drehgelagerten Loszahnrad 23 der ersten Radebene RE-V4. Die P2-Position entspricht einer Elektromaschinen-Position, bei der die Elektromaschine 11 trieblich zwischen der Brennkraftmaschine 7 und dem Getriebe 1 geschaltet ist.

Alternativ dazu kann die Elektromaschine 11 über einen P3-Lastpfad an einer P3-Position (das heißt abtriebsnah und im Getriebe 1) an der ersten Radebene RE-V4 angebunden sein. Der P3-Lastpfad verläuft von der Elektromaschine 11 über die Elektromaschinen-Welle 9, die zweite Radebene RE-E1 mit deren Freilaufkupplung F sowie die Zwischenwelle 17 zum Zwischenwellen-Zahnrad 21 der ersten Radebene RE-V4.

Die in der Fig. 1 gezeigten Schaltelemente SE-A, SE-B, SE-C, SE-D, SE-R, SE-E können als bekannte und bei Schaltgetrieben übliche Einfach- oder Doppel-Synchronkupplungen ausgeführt sein, die elektronisch gesteuert über entsprechende elektrisch/hydraulisch betätigte Aktoren jeweils aus einer Neutralstellung (wie gezeichnet) geschaltet werden. Die Kupplung K kann eine hydraulisch lastschaltbare Lamellenkupplung sein.

Mit der in der Fig. 1 gezeigten Getriebeanordnung kann bei nur vier Stirnzahnradsätzen eine Vielzahl von Vorwärts-Gangschaltungen vorgenommen werden. Beispielhaft sind in der Schaltmatrix der Fig. 2a sechs verbrennungsmotorische Gänge VM1 bis VM6 und drei elektromotorische Gangstufen EM1 bis EM3 realisiert, mit deren Hilfe der Hybridantriebsstrang rein elektromotorisch, rein verbrennungsmotorisch sowie in einem Hybridbetrieb (das heißt zum Beispiel VM/EM-Boosten, EM-Rekuperieren) betreibbar ist. Zudem ist das Getriebe 1 so ausgelegt, dass jeder Zielgang aus jedem beliebigen aktuellen Gang durch maximal zwei Schaltungen zugkraftunterbrechungsfrei erreichbar ist und dass die Möglichkeit von Mehrfachrückschaltungen besteht (zum Beispiel von VM5 nach VM3 oder von VM5 nach VM2).

Die Schaltelemente SE-A bis SE-R sowie die Lamellenkupplung K sind so ausgelegt, dass diese bei den Radsatzschaltungen eine Synchronisierung vornehmen können.

Wie aus der Schaltmatrix (Fig. 2a) hervorgeht, sind die verbrennungsmotorischen Gänge VM1 bis VM3 als Verwindungsgänge ausgelegt, die sämtliche vier Radebenen nutzen. Die Gänge VM4 bis VM6 sind als einfache Gänge ausgelegt, die entweder die Radebene RE-V4 alleine nutzen (VM4) oder die Radebene RE-V4 in Kombination entweder mit der Radebene RE-V5 (VM5) oder mit der dritten Radebene RE-V6 (VM6) nutzen.

Im elektromotorischen ersten Gang EM1 ist das Schaltelement SE-D nach rechts gerückt. Dadurch ergibt sich ein Lastpfad, in dem die Elektromaschinen-Welle 9, die zweite Radebene RE-E1 mitsamt Freilaufkupplung F, die Zwischenwelle 17 sowie die erste Radebene RE-V4 eingebunden ist. Im elektromotorischen ersten Gang EM1 ist die Lamellenkupplung K geöffnet. Im Unterschied dazu ist im elektromotorischen zweiten Gang EM2 die Lamellenkupplung K geschlossen und das Schaltelement SE-A betätigt. In dem sich ergebenden Lastpfad (bei EM2) ist die Elektromaschinen-Welle 9, die Lamellenkupplung K, die Hohlwelle 45, die dritte Radebene RE-E3, das Schaltelement SE-A sowie die erste Radebene RE-V4 eingebunden. Der elektromotorische zweite Gang EM2 ist daher ein Verwindungsgang, der die dritte Radebene RE-E3 sowie die erste Radebene RE-V4 nutzt. Gleiches gilt auch für den dritten elektromotorischen Gang EM3, dessen Lastpfad jedoch nicht über das Schaltelement SE-A, sondern über das geschlossene Schaltelement SE-C und die Zwischenwelle 17 zur ersten Radebene RE-V4 verläuft. Auf diese Weise kann mittels der Freilaufkupplung F und der Lamellenkupplung K eine zugkraftunterbrechungsfreie Lastschaltung zwischen den Gängen EM1 und EM2 und zwischen den Gängen EM1 und EM3 erfolgen. Eine zugkraftunterbrechungsfreie Schaltung zwischen EM2 und EM3 wird dagegen über den elektromotorischen ersten Gang EM1 realisiert, der in diesem Fall als ein Stützgang wirkt (das heißt Schaltabfolge EM2-EM1-EM3 oder EM3-EM1-EM2).

Wie in der Schaltmatrix (Fig. 2a) veranschaulicht ist, können außerdem in jedem der elektromotorischen Gänge EM1 bis EM3 unterschiedliche verbrennungsmotorische Gänge angebunden werden (zum Beispiel EM1+VM1 oder EM1+VM3). Gleiches trifft auch auf die verbrennungsmotorischen Gänge VM1 bis VM6 zu (zum Beispiel VM4+EM1 oder VM4+EM3). Folglich kann das Getriebe 1 mit verschiedenen verbrennungsmotorischen und elektromotorischen Gängen gleichzeitig betrieben werden.

Wie aus der Schaltmatrix (Fig. 2a) weiter hervorgeht, kann aus allen verbrennungsmotorischen Gängen VM1 bis VM6 in den ersten elektromotorischen Gang EM1 geschaltet werden bzw. können im Hybridbetrieb alle verbrennungsmotorische Gänge VM1 bis VM6 mit dem ersten elektromotorischen Gang EM1 kombiniert werden. Aus den verbrennungsmotorischen Gängen VM3 und VM4 kann zusätzlich in den zweiten elektromotorischen Gang EM2 geschaltet werden bzw. können im Hybridbetrieb die verbrennungsmotorischen Gängen VM3 und VM4 mit dem zweiten elektromotorischen Gang EM2 kombiniert werden. Aus den verbrennungsmotorischen Gängen VM4, VM5 und VM6 kann zusätzlich in den dritten elektromotorischen Gang EM3 geschaltet werden bzw. können im Hybridbetrieb die verbrennungsmotorischen Gängen VM4, VM5 und VM6 mit dem dritten elektromotorischen Gang EM3 kombiniert werden. Gleiches gilt auch in umgekehrter Schaltrichtung, das heißt für das Schalten von einem der elektromotorischen Gänge in verbrennungsmotorische Gänge.

Wie aus der Schaltmatrix (Fig. 2a) weiter hervorgeht, wird mit den verbrennungsmotorischen Gängen VM1 und VM2 jeweils ein Lastpfad bereitgestellt, in dem die Elektromaschinen-Welle 9 integriert ist, das heißt die Elektromaschinen-Welle 9 dreht in den Gängen VM1 und VM2 mit. Im Unterschied dazu wird mit den verbrennungsmotorischen Gängen VM3 bis VM6 jeweils ein Lastpfad bereitgestellt, in dem die Elektromaschinen-Welle 9 nicht integriert ist, das heißt die Elektromaschinen-Welle 9 dreht in den Gängen VM3 bis VM6 nicht mit, sondern ist stillgelegt. Die Elektromaschine 11 ist daher in den Gängen VM3 bis VM6 vom Antriebsstrang entkoppelt

Zudem ist hervorzuheben, dass die elektromotorischen Gänge EM1 bis EM3 jeweils einen Lastpfad bereitstellen, in dem die Brennkraftmaschinen-Welle 3 nicht integriert ist, das heißt die Brennkraftmaschinen-Welle 3 dreht bei geschalteten Gängen EM1 bis EM3 nicht mit, sondern ist vielmehr stillgelegt. Die Brennkraftmaschine 7 ist daher bei den geschalteten Gängen EM1 bis EM3 vom Antriebsstrang abgekoppelt.

Nachfolgend sind spezielle Fahrbetriebsarten hervorgehoben, die mittels des Getriebes 1 realisierbar sind:
So ist mit der in der Fig. 1 gezeigten Getriebestruktur ein verbrennungsmotorisches Anfahren aus dem Fahrzeugstillstand wie folgt ermöglicht: Im Fahrzeugstillstand läuft die Brennkraftmaschine 7 bei einer Leerlauf-Drehzahl. Die Schaltelemente SE-E und SE-C sind in ihrer Neutralstellung, das heißt geöffnet. Das Schaltelement SE-A ist geschlossen sowie das Schaltelement SE-B nach rechts betätigt und die Lamellenkupplung K noch geöffnet. In diesem Zustand treibt die Brennkraftmaschinen-Welle 3 die vierte Radebene RE-V5 sowie über die Hohlwelle 39 die dritte Radebene RE-E3 sowie die auf der Elektromaschinen-Welle 9 drehgelagerte Hohlwelle 45 mit einer mit der Leerlauf-Drehzahl der Brennkraftmaschine 7 korrelierenden Drehzahl an. Für das Anfahren wird die Lamellenkupplung K geschlossen, wodurch eine Drehmomentübertragung von der Hohlwelle 45, die Elektromaschinen-Welle 9 über die Freilaufkupplung F zur Abtriebsseite (das heißt zur ersten Radebene RE-V4) erfolgt. Mit der Getriebestruktur ist also ein verbrennungsmotorisches Anfahren ermöglicht, obwohl kein Anfahrelement zwischen der Brennkraftmaschine 7 und dem Getriebe 1 vorhanden ist.

Mit dem Getriebe 1 ist zudem ein Boost-Betrieb ermöglicht, bei dem für einzelne verbrennungsmotorische Gänge VM1 bis VM6 mehrere elektromotorische Gänge zum Boosten zur Verfügung stehen. Umgekehrt stehen auch einzelnen elektromotorischen Gängen EM1 bis EM3 mehrere verbrennungsmotorische Gänge zum Boosten zur Verfügung.

Mit der in der Fig. 1 gezeigten Getriebestruktur ist im elektromotorischen Betrieb ein zugkraftunterbrechungsfreies Schalten von EM1 nach EM2 wie folgt ermöglicht: So verläuft im ersten elektromotorischen Gang EM1 der Kraftfluß von der Elektromaschine 11, der Elektromaschinen-Welle 9, der Freilaufkupplung F und dem Schaltelelement SE-D der zweiten Radebene RE-E1 sowie der Zwischenwelle 17 zur ersten Radebene RE-V4. Für ein zugkraftunterbrechungsfreies Schalten in den zweiten elektromotorischen Gang EM2 wird zunächst das Schaltelement SE-A geschlossen und anschließend die Lamellenkupplung K geschlossen. Dadurch stellt sich ein Kraftfluß ein, und zwar von der auf der Elektromaschinen-Welle 9 gelagerten Hohlwelle 45, der dritten Radebene RE-E3, dem betätigten Schaltelement SE-A und dem geschalteten Loszahnrad 23 bis zur ersten Radebene RE-V4. Aufgrund der Übersetzungsverhältnisse hebt die Freilauf-Innenseite 28 der Freilaufkupplung F von der mit dem Zahnrad 27 verbundenen Freilauf-Außenseite ab, so dass keine Drehmomentübertragung mehr von der Elektromaschine 11 über die Freilaufkupplung F erfolgt und der Gang EM2 geschaltet ist. Bei einer Rückschaltung in den ersten Gang EM1 würde zunächst die Lamellenkupplung K geöffnet werden und dadurch dessen Innenlamellenträger durchrutschen, so dass sich die Drehzahl an der Elektromaschinen-Welle 9 steigert, bis der Freilaufkupplung F wieder greift. Die gleiche zugkraftunterbrechungsfreie Schaltung ist auch zwischen dem Gang EM1 und dem Gang EM3 durchführbar.

Mit der in der Fig. 1 gezeigten Getriebestruktur ist zudem ein Standladen der Elektromaschine 11 (in der Schaltmatrix der Fig. 2a mit SL bezeichnet) ermöglicht, sofern das Fahrzeug im Fahrzeugstillstand ist, zum Beispiel an einer Ampel oder im Stau steht: In diesem Fall ist das Schaltelement SE-B nach rechts betätigt, um die Brennkraftmaschinen-Welle 3 mit der vierten Radebene RE-V5 und mit der auf der Elektromaschinen-Welle 9 drehgelagerten Hohlwelle 45 zu verbinden. Die Freilaufkupplung F ist in ihre Freilauf-Stellung geschaltet, in der in beide Richtungen der Freilauf aktiviert ist, das heißt in beide Richtungen keine Drehmomentübertragung ermöglicht ist (das heißt in der Schaltmatrix der Fig. 2a SE-D li). In diesem Fall erfolgt ein Kraftfluß von der Brennkraftmaschine 7 über die Brennkraftmaschinen-Welle 3, das Schaltelement SE-B, die vierte Radebene RE-V5, die Hohlwelle 39, die dritte Radebene RE-E3, die Hohlwelle 45 und die geschlossene Kupplung K bis zur Elektromaschine 11. Es ist zudem hervorzuheben, dass der Standlade-Betriebe ohne ein Einlegen der Parksperre durchführbar ist.

Wie oben dargelegt, kann im Fahrzeugstillstand die laufende Brennkraftmaschine 7 durch das Schließen der Lamellenkupplung K mit der Elektromaschine 11 verbunden werden und somit die Traktionsbatterie für ein elektrisches Fahren oder das Reversieren laden. In diesem Fall ist das Schaltelement SE-D in seiner dritten Freilauf-Stellung (das heißt in der Schaltmatrix der Fig. 2a linke Stellung von SE-D), wodurch die Drehmomentübertragung in beide Richtungen unterbunden ist.

Ein Brennkraftmaschinen-Start (in der Schaltmatrix der Fig. 2a mit VM-S bezeichnet) ist mit Hilfe der Elektromaschine 11 durchführbar. Die Elektromaschine 11 kann die Brennkraftmaschine 7 über einen Lastpfad starten, bei dem das Schaltelement SE-B nach rechts oder links betätigt ist und bei dem die Freilaufkupplung F in ihre Freilauf-Stellung geschaltet ist (das heißt in der Schaltmatrix der Fig. 2a SE-D li). Durch Schließen der Lamellenkupplung K kann die Elektromaschine 11 die Brennkraftmaschine 7 starten. Die Elektromaschine 11 kann bei geschlossener Lamellenkupplung K stehen und beim Anlaufen die Brennkraftmaschine 7 starten. Alternativ dazu kann die Elektromaschine 11 bei geöffneter Lamellenkupplung K eine definierte Drehzahl einstellen und dann die Brennkraftmaschine 7 durch das Schließen der Lamellenkupplung K starten.

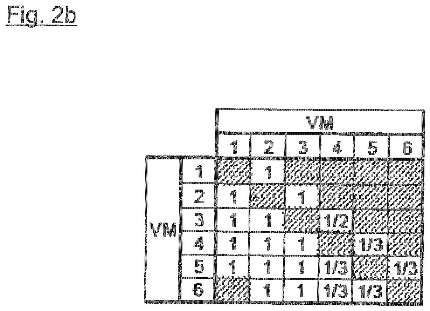

Zwischen den verbrennungsmotorischen Gängen VM1 bis VM6 kann mit Hilfe der Elektromaschine 11 zudem zugkraftunterbrechungsfrei geschaltet werden, wie es in der Schaltmatrix der Fig. 2b angedeutet ist. In der Schaltmatrix sind jeweils in einer oberen horizontalen Zeile und in einer seitlichen vertikalen Zeile die sechs verbrennungsmotorischen Gänge VM1 bis VM6 aufgelistet. Diese laufen in horizontaler und vertikaler Verlängerung in Kästchen zusammen, in denen die Ziffern 1, 2 und/oder 3 eingetragen sind. Die in den Kästchen angegebenen Ziffern 1, 2 oder 3 symbolisieren die elektromotorische Gänge EM1, EM2, EM3, die beim verbrennungsmotorischen Schalten als Stützgang wirken können. Der eingelegte elektromotorische Stützgang stellt beim Schaltvorgang einen Stütz-Lastpfad zwischen der Elektromaschine 11 und dem Getriebeausgang bereit. Während des Schaltvorgangs (das heißt die Brennkraftmaschine 7 ist vom Antriebsstrang abgekoppelt) kann somit die Elektromaschine 11 ein Antriebsmoment erzeugen, das über den Stütz-Lastpfad zur Abtriebsseite übertragen wird.

Nachfolgend ist exemplarisch ein im Fahrbetrieb erfolgender zugkraftunterbrechungsfreier Schaltvorgang vom verbrennungsmotorischen Gang VM5 in den verbrennungsmotorischen Gang VM3 beschrieben. Bei diesem Schaltvorgang dient gemäß der Schaltmatrix aus der Fig. 2b der elektromotorische Gang EM1 als ein Stützgang: Im Gang VM5 ist das Schaltelement SE-B nach rechts geschaltet und das Schaltelement SE-C betätigt (vergleiche Schaltschema der Fig. 2a). Dadurch verläuft ein Lastpfad von der Brennkraftmaschine 7, der vierten Radebene RE-V5, der Zwischenwelle 17 bis zur ersten Radebene RE-V4. Zu Beginn des Schaltvorgangs wird die Brennkraftmaschine 7 abgeschaltet und in gleichem Maße die Elektromaschine 11 hochgefahren. Sobald sich das auf der Freilaufkupplung F gelagerte Zahnrad 27 der zweiten Radebene RE-E1 schneller dreht als die Zwischenwelle 17 erfolgt eine Lastübertragung von der Brennkraftmaschine 7 zur Elektromaschine 11. Nach der Lastübertragung auf die Elektromaschine 11 wird der Schaltvorgang von dem aktuellen Gang VM5 in den Zielgang VM3 durchgeführt, das heißt das Schaltelement SE-C wird in die Neutralstellung geschaltet, das Schaltelement A wird betätigt und das Schaltelement SE-B bleibt nach rechts geschaltet. Dadurch ergibt sich ein Lastpfad von der Brennkraftmaschine 7 über das Schaltelement SE-B, die vierte Radebene RE-V5, die auf der Zwischenwelle 17 drehgelagerte Hohlwelle 39, die dritte Radebene RE-E3, das Schaltelement A zur ersten Radebene RE-V4. Zum Ende des Schaltvorgangs wird die Brennkraftmaschine 7 wieder zugeschaltet und in gleichem Maße die Elektromaschine 11 runtergefahren. Sobald sich die Zwischenwelle 17 schneller dreht als das auf der Freilaufkupplung F gelagerte Zahnrad 27 der zweiten Radebene RE-E1 hebt die Freilauf-Innenseite 28 von dem Zahnrad 27 ab, das heißt es erfolgt eine Lastübertragung von der Elektromaschine 11 zur Brennkraftmaschine 7 und der Zielgang VM3 ist geschaltet.

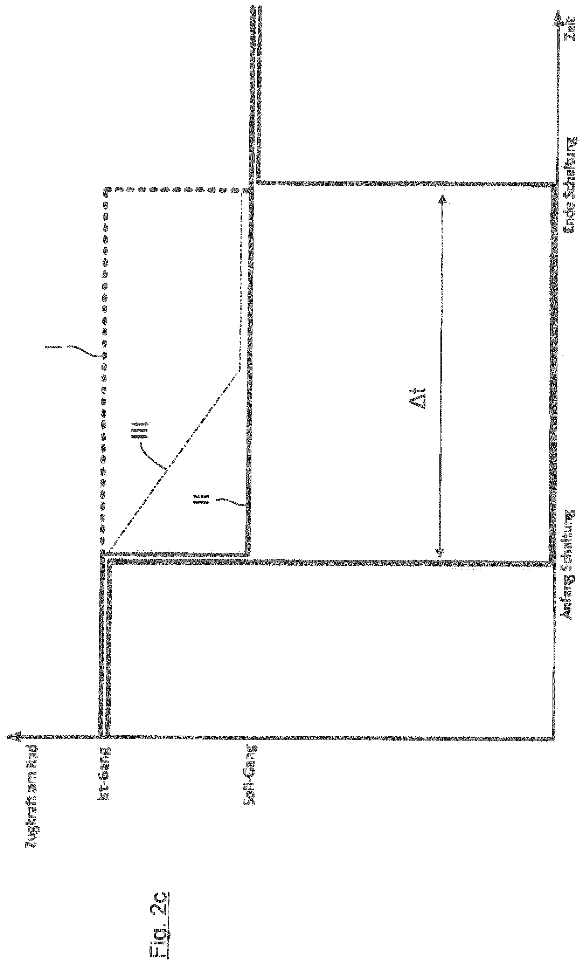

Der obige Schaltvorgang ist in der Fig. 2c in einem Zeitintervall Δt grob schematisch veranschaulicht. Demzufolge wird während des Schaltvorgangs Δt von der Elektromaschine 11 ein beliebig einstellbarer Momentenverlauf I, II oder III erzeugt, wie sie beispielhaft in der Fig. 2c gezeigt sind. Der von der Elektromaschine 11 generierte Momentenverlauf I während des Schaltvorgangs Δt ist mit gestrichelter Linie gezeigt, wonach das von der Elektromaschine 11 erzeugte Moment so bemessen ist, dass die Zugkraft am Rad während des Schaltvorgangs Δt konstant bleibt und erst am Ende des Schaltvorgangs Δt stufenartig reduziert wird, und zwar bis auf einen Wert, der mit der Zugkraft am Rad bei dem eingelegten verbrennungsmotorischen Zielgang korreliert. Alternativ dazu ist ein von der Elektromaschine 11 generierter Momentenverlauf II mit durchgezogener Linie gezeigt. Demzufolge ist das von der Elektromaschine 11 erzeugte Moment so bemessen, dass die Zugkraft am Rad unmittelbar zu Beginn des Schaltvorgangs Δt auf einen Wert stufenartig reduziert wird, der mit der Zugkraft am Rad bei eingelegtem verbrennungsmotorischem Zielgang korreliert. Alternativ dazu kann die Elektromaschine 11 einen mit strichpunktierter Linie angedeuteten Momentenverlauf III erzeugen, bei dem das von der Elektromaschine 11 erzeugte Moment zunächst konstant bleibt und dann rampenartig bis auf einen Wert reduziert wird, der mit der Zugkraft am Rad bei eingelegtem verbrennungsmotorischem Zielgang korreliert.

Wie aus der Schaltmatrix der Fig. 2b weiter hervorgeht, stehen bei einem zugkraftunterbrechungsfreien Schaltvorgang zwischen verbrennungsmotorischen Gängen zumindest ein elektromotorischer Gang zur Verfügung. Für bestimmte Schaltvorgänge (zum Beispiel VM5 ->VM6) stehen zwei elektromotorische Gänge EM1 oder EM3 zur Verfügung.

Zudem ist mit der aus der Fig. 1 gezeigten Getriebestruktur ein Schleppstart der Brennkraftmaschine 7 ohne zusätzlichen Anlasser/Starter realisierbar: Für einen solchen Schleppstart wird zum Beispiel der Gang EM1 eingelegt und die Elektromaschine 11 bis Erreichen einer Drehzahlgrenze hochgefahren. In diesem Fahrzustand sind die dritte Radebene RE-E3, die vierte Radebene RE-V5 sowie die Brennkraftmaschinen-Welle 3 stillgelegt, so dass das Schaltelement SE-B einlegbar ist. Anschließend wird die Lamellenkupplung K geschlossen und so die Brennkraftmaschine 7 angeschleppt.

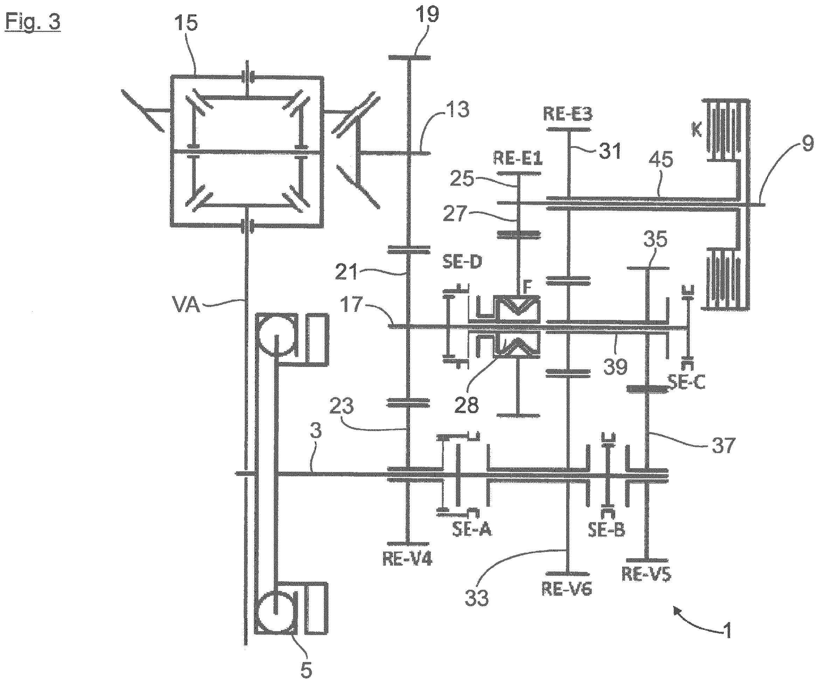

In der Fig. 3 ist ein weiteres Ausführungsbeispiel gezeigt, dessen Aufbau und Funktionsweise weitgehend identisch mit dem in der Fig. 1 gezeigten Ausführungsbeispiel ist. Im Unterschied zur Fig. 1 ist die Rückwärtsgangebene RE-VR weggelassen. In einem weiteren Unterschied zur Fig. 1 sind in der Fig. 3 die beiden obigen Schaltelemente SE-A und SEE zu einem gemeinsamen Schaltelement SE-A zusammengefasst. Das gemeinsame Schaltelement SE-A kuppelt in einer ersten Schaltstellung das auf der Brennkraftmaschinen-Welle 3 drehgelagerte Loszahnrad 23 der ersten Radebene RE-V4 mit der Brennkraftmaschinen-Welle 3, während gleichzeitig das auf der Brennkraftmaschinen-Welle 3 drehgelagerte Loszahnrad 23 von dem Loszahnrad 33 der dritten Radebene RE-E3 abgekuppelt ist. In einer zweiten Schaltstellung kuppelt das gemeinsame Schaltelement SE-A das auf der Brennkraftmaschinen-Welle 3 drehgelagerte Loszahnrad 23 der ersten Radebene RE-V4 nicht mehr mit der Brennkraftmaschinen-Welle 3, sondern vielmehr mit dem auf der Brennkraftmaschinen-Welle 3 drehgelagerten Loszahnrad 33 der dritten Radebene RE-E3.

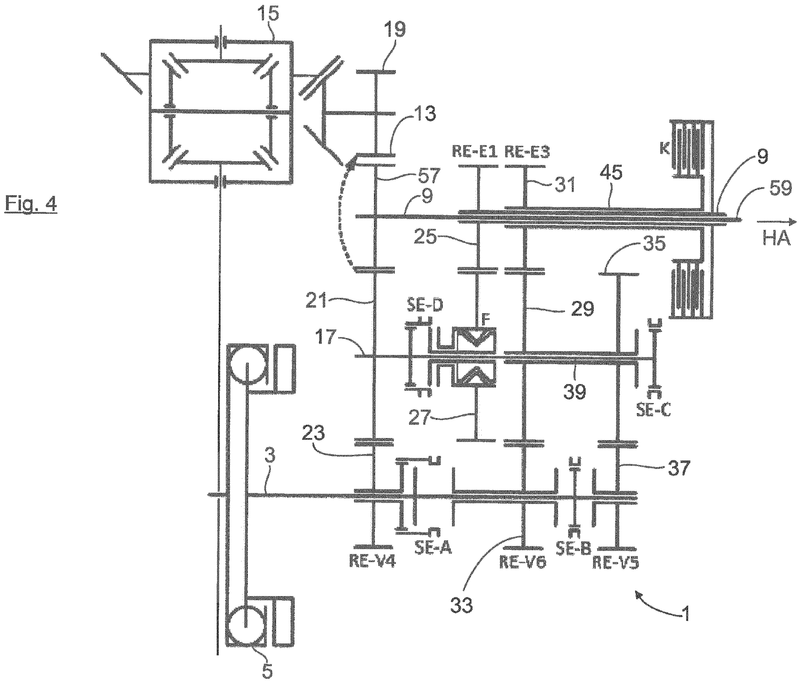

In der Fig. 4 ist das Automatikgetriebe 1 für einen Allradantrieb ausgelegt. Demzufolge kämmt das auf der Zwischenwelle 17 drehfest angeordnete Zahnrad 21 nicht nur mit dem auf der Abtriebswelle 13 drehfest angeordneten Zahnrad 19, sondern zusätzlich auch mit einem Festzahnrad 57 einer zur zweiten Fahrzeugachse HA führenden Kardanwelle 59. Im Hinblick auf eine bauraumgünstige Anordnung ist in der Fig. 4 die Elektromaschinen-Welle 9 als eine auf der Kardanwelle 59 koaxial drehgelagerte Hohlwelle ausgeführt.

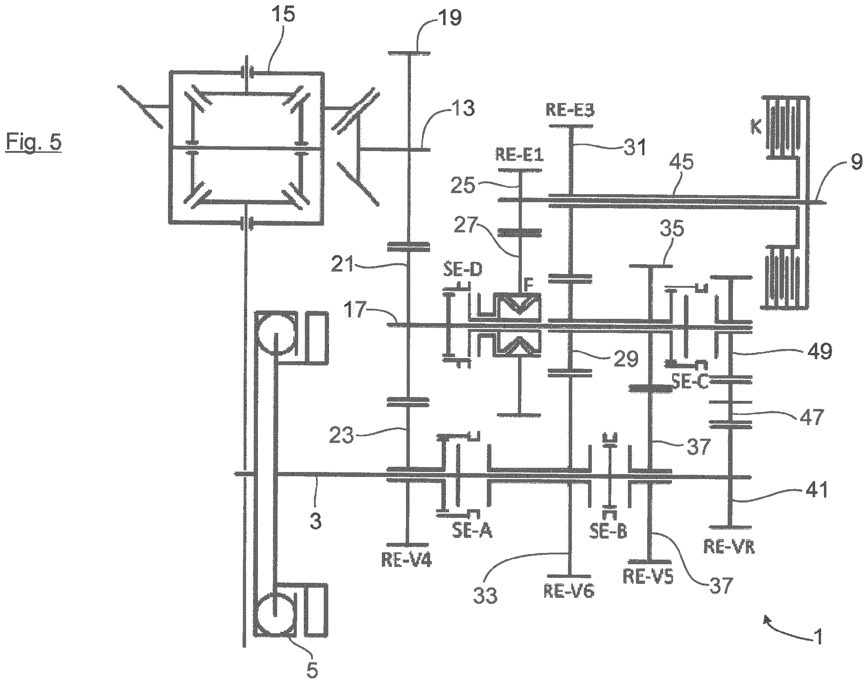

Alternativ zur Fig. 1 ist in der Fig. 5 die Rückwärtsgang-Radebene RE-VR aufgebaut, und zwar mit einem drehfest auf der Brennkraftmaschinen-Welle 3 angeordneten Zahnrad 41, das unter Zwischenschaltung eines Zwischenzahnrads 47 mit einem lose auf der Zwischenwelle 17 drehgelagerten Zahnrad 49 kämmt. Das Zahnrad 49 ist über ein Schaltelement SE-C mit der auf der Zwischenwelle 17 drehgelagerten Hohlwelle 39 kuppelbar. Bei geschaltetem Rückwärtsgang stellt sich ein Kraftfluß ein, und zwar von der Brennkraftmaschine 7 über die Brennkraftmaschinen-Welle 3, die Zahnräder 41, 47, 49 der Rückwärtsgang-Ebene RE-VR, das Schaltelement SE-C, die Hohlwelle 39, die Zahnräder 29, 31 der dritten Radebene RE-E3, die Hohlwelle 45, die Lamellenkupplung K, die Elektromaschinen-Welle 9, die Zahnräder 25, 27 der zweiten Radebene RE-E1, die Freilauf-Kupplung F, das Schaltelement SE-D, die Zwischenwelle 17 sowie dessen Festzahnrad 21 der ersten Radebene RE-V4 und weiter bis zur Abtriebswelle 13.

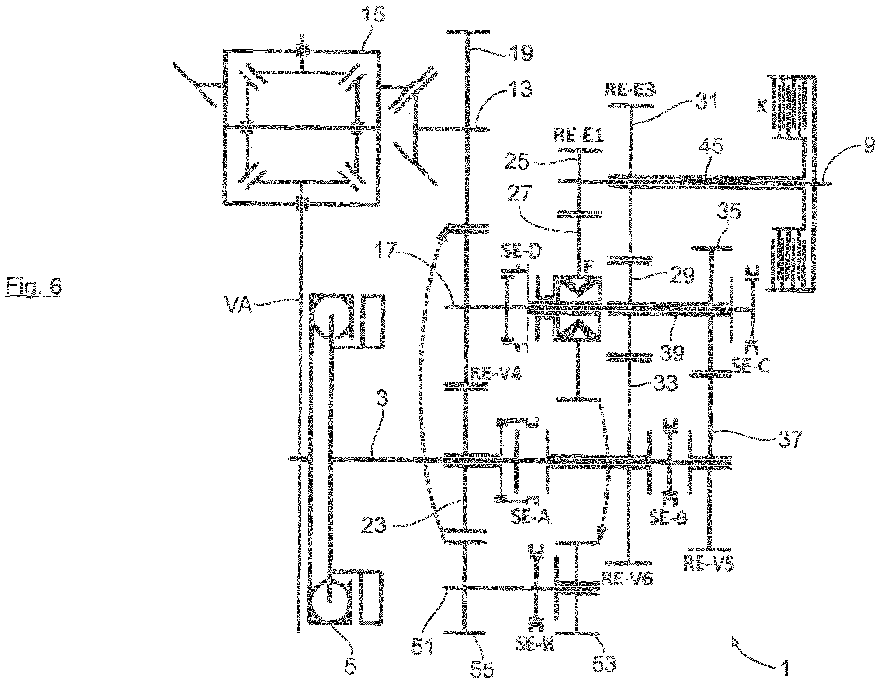

Alternativ dazu ist in der Fig. 6 der Rückwärtsgang im Getriebe 1 durch eine zur Brennkraftmaschinen-Welle 3 achsparallele Rückwärtsgang-Welle 51 realisiert. Auf der Rückwärtsgang-Welle 51 ist ein Loszahnrad 53 drehbar gelagert, das mit dem auf der Zwischenwelle 17 gelagerten Loszahnrad 27 der zweiten Radebene RE-E1 kämmt und über ein Schaltelement SE-R mit der Rückwärtsgang-Welle 51 kuppelbar ist. Auf der Rückwärtsgang-Welle 51 ist außerdem ein Festzahnrad 55 angeordnet, das mit dem Festzahnrad 19 der Abtriebswelle 13 kämmt.

In den Ausführungsbeispielen der Fig. 1 sowie 3 bis 6 sind sämtliche Radebenen in der Axialrichtung zwischen der Brennkraftmaschine 7 und der Elektromaschine 11 angeordnet sind. Die erste Radebene RE-V4 ist dabei auf der, der Brennkraftmaschine 7 zugewandten Getriebeseite angeordnet. Im weiteren Axialverlauf folgen nacheinander die zweite Radebene RE-E1, die dritte Radebene RE-E3 und die vierte Radebene RE-V5. Es ist daher zwischen der ersten Radebene RE-V4 und der dritten Radebene RE-E3 ein ausreichend großer Bauraum für die Freilaufkupplung F vorzuhalten.

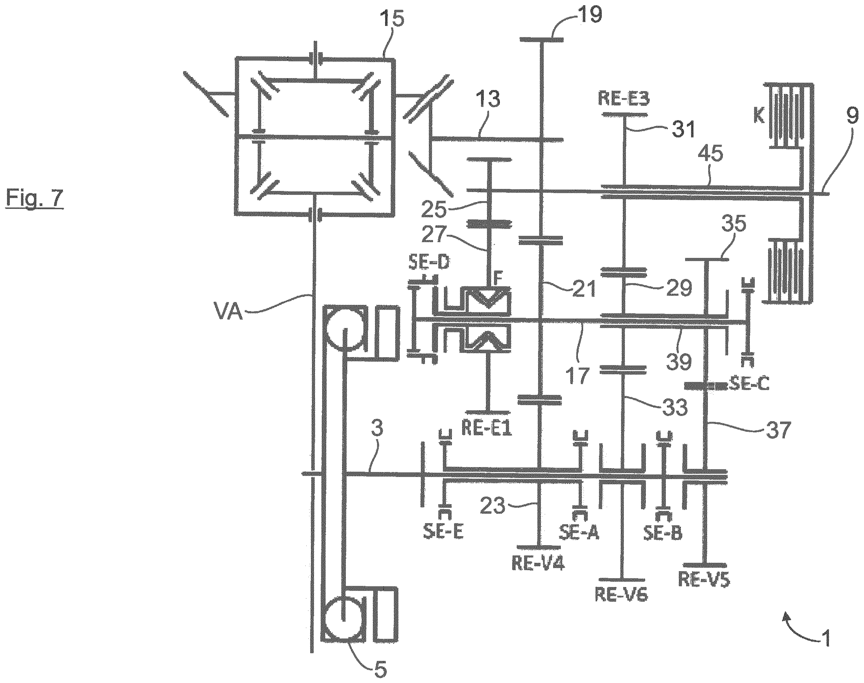

Im Unterschied dazu sind in der Fig. 7 die Axialpositionen der ersten Radebene RE-V4 und der zweiten Radebene RE-E1 vertauscht. Auf diese Weise ergibt sich eine in der Fig. 7 gezeigte verschachtelte Bauweise, bei der die Freilaufkupplung F in Axialrichtung in etwa auf gleicher Höhe wie die Ritzelwelle 13 positioniert ist. Dies resultiert in einer im Vergleich zu den vorangegangenen Ausführungsbeispielen axial kompakteren Getriebestruktur.

## Patentansprüche

1. Hybridantriebsstrang für ein hybridgetriebenes Kraftfahrzeug, mit einem, mittels Schaltelementen in unterschiedliche Übersetzungsstufen umschaltbaren Getriebe (1), das über eine Brennkraftmaschinen-Welle (3) mit einer Brennkraftmaschine (7), über eine Elektromaschinen-Welle (9) mit einer Elektromaschine (11) sowie über eine Abtriebswelle (13) mit zumindest einer Fahrzeugachse (VA) trieblich verbindbar ist, wobei die Brennkraftmaschinen-Welle (3) und die Elektromaschinen-Welle (9) zueinander achsparallel angeordnet sind, wobei das Getriebe (1) als ein Stirnradgetriebe ausgeführt ist, bei dem die Brennkraftmaschinen-Welle (3), die Elektromaschinen-Welle (9) und die Abtriebswelle (13) über, Radebenen bildende Stirnzahnradsätze miteinander trieblich verbindbar sind, die mittels der Schaltelemente schaltbar sind, wobei das Getriebe (1) eine zwischen der Brennkraftmaschinen-Welle (3) und der Elektromaschinen-Welle (9) achsparallel angeordnete Zwischenwelle (17) aufweist, wobei die Zwischenwelle (17) über einen, eine erste Radebene (RE-V4) bildenden Stirnzahnradsatz mit der Abtriebswelle (13) verbindbar ist, wobei die erste Radebene (RE-V4) ein drehfest auf der Zwischenwelle (17) gelagertes Zahnrad (21) aufweist, und
wobei die erste Radebene (RE-V4) ein drehfest auf der Abtriebswelle (13) gelagertes Zahnrad (19) aufweist, das mit dem drehfest auf der Zwischenwelle (17) gelagerten Zahnrad (21) kämmt, **dadurch gekennzeichnet, dass** die erste Radebene (RE-V4) ein auf der Brennkraftmaschinen-Welle (3) drehgelagertes Loszahnrad (23) aufweist, das mit dem Zwischenwellen-Zahnrad (21) kämmt und über ein erstes Schaltelement (SE-A) oder ein fünftes Schaltelement (SE-E) mit der Brennkraftmaschinen-Welle (3) kuppelbar oder davon abkuppelbar ist.

2. Hybridantriebsstrang nach Anspruch 1, **dadurch gekennzeichnet, dass** die Zwischenwelle (17) über einen, eine zweite Radebene (RE-E1) bildenden Stirnzahnradsatz mit der Elektromaschinen-Welle (9) verbindbar ist, und dass die Zwischenwelle (17) mit einem, eine dritte Radebene (RE-E3) bildenden Stirnzahnradsatz mit der Elektromaschinen-Welle (9) verbindbar ist.

3. Hybridantriebsstrang nach Anspruch 1 oder 2, **dadurch gekennzeichnet, dass** die Zwischenwelle (17) über einen, eine vierte Radebene (RE-V5) bildenden Stirnzahnradsatz mit der Brennkraftmaschinen-Welle (3) verbindbar ist.

4. Hybridantriebsstrang nach Anspruch 2 oder 3, **dadurch gekennzeichnet, dass** die zweite Radebene (RE-E1) ein auf der Elektromaschinen-Welle (9) drehfest gelagertes Zahnrad (25) und ein damit kämmendes Zwischenwellen-Zahnrad (27) aufweist, das über eine Freilaufkupplung (F) mit der Zwischenwelle (17) verbindbar ist.

5. Hybridantriebsstrang nach Anspruch 4, **dadurch gekennzeichnet, dass** der Freilaufkupplung (F) ein viertes Schaltelement (SE-D) zugeordnet ist, das in einer Zugbetrieb-Stellung eine Drehmomentübertragung von der Elektromaschine (11) in Richtung auf die Zwischenwelle (17) zulässt und in Gegenrichtung unterbindet, in einer Zug-/Schubbetrieb-Stellung die Drehmomentübertragung in beide Richtungen zulässt, und in einer Freilauf-Stellung die Drehmomentübertragung in beide Richtungen unterbindet.

6. Hybridantriebsstrang nach einem der Ansprüche 2 bis 5, **dadurch gekennzeichnet, dass** die dritte Radebene (RE-E3) ein auf der Zwischenwelle (17) drehgelagertes Loszahnrad (29), das über ein drittes Schaltelement (SE-C) mit der Zwischenwelle (17) kuppelbar oder davon abkuppelbar ist, und ein damit kämmendes, auf der Elektromaschinen-Welle (9) drehgelagertes Loszahnrad (31) aufweist, das über ein siebtes Schaltelement (K) mit der Elektromaschinen-Welle (9) kuppelbar oder davon abkuppelbar ist.

7. Hybridantriebsstrang nach Anspruch 6, **dadurch gekennzeichnet, dass** die dritte Radebene (RE-E3) ein auf der Brennkraftmaschinen-Welle (3) drehgelagertes Loszahnrad (33) aufweist, das über ein erstes Schaltelement (SE-A) mit dem auf der Brennkraftmaschinen-Welle (3) gelagerten Loszahnrad (23) der ersten Radebene (RE-V4) kuppelbar oder davon abkuppelbar ist und über ein zweites Schaltelement (SE-B) mit der Brennkraftmaschinen-Welle (3) kuppelbar oder davon abkuppelbar ist.

8. Hybridantriebsstrang nach einem der Ansprüche 6 und 7, **dadurch gekennzeichnet, dass** die vierte Radebene (RE-V5) ein auf der Zwischenwelle (17) gelagertes Loszahnrad (35), das über das dritte Schaltelement (SE-C) mit der Zwischenwelle (17) kuppelbar oder davon abkuppelbar ist, und ein damit kämmendes, auf der Brennkraftmaschinen-Welle (3) drehgelagertes Loszahnrad (37) aufweist, das über das zweite Schaltelement (SE-B) mit der Brennkraftmaschinen-Welle (3) kuppelbar oder davon abkuppelbar ist.

9. Hybridantriebsstrang nach Anspruch 8, **dadurch gekennzeichnet, dass** das zweite Schaltelement (SE-B) beidseitig schaltbar ist und zwischen dem auf der Brennkraftmaschinen-Welle (3) drehgelagertes Loszahnrad (33) der dritten Radebene (RE-E3) und dem auf der Brennkraftmaschinen-Welle (3) drehgelagerten Loszahnrad (37) der vierten Radebene (RE-V5) angeordnet ist, und dass das zweite Schaltelement (SE-B) in einer ersten Schaltstellung das auf der Brennkraftmaschinen-Welle (3) drehgelagerte Loszahnrad (33) der dritten Radebene (RE-E3) mit der Brennkraftmaschinen-Welle (3) kuppelt und in einer zweiten Schaltstellung das auf der Brennkraftmaschinen-Welle (3) drehgelagerte Loszahnrad (37) der vierten Radebene (RE-V5) mit der Brennkraftmaschinen-Welle (3) kuppelt.

10. Hybridantriebsstrang nach Anspruch 8 oder 9, **dadurch gekennzeichnet, dass** das auf der Zwischenwelle (17) gelagerte Loszahnrad (35) der vierten Radebene (RE-V5) und das auf der Zwischenwelle (17) gelagerte Loszahnrad (29) der dritten Radebene (RE-E3) auf einer Hohlwelle (39) drehfest angeordnet sind, die auf der Zwischenwelle (17) koaxial drehgelagert ist und über das genau eine dritte Schaltelement (SE-C) mit der Zwischenwelle (17) kuppelbar oder davon abkuppelbar ist.

11. Hybridantriebsstrang nach Anspruch 7 bis 10, **dadurch gekennzeichnet, dass** das erste Schaltelement (SE-A) und das fünfte Schaltelement (SE-E) zu einem gemeinsamen Schaltelement zusammengefasst sind, in dessen erster Schaltstellung das auf der Brennkraftmaschinen-Welle (3) drehgelagerte Loszahnrad (23) der ersten Radebene (RE-V4) mit der Brennkraftmaschinen-Welle (3) gekuppelt ist, und in dessen zweiter Schaltstellung das auf der Brennkraftmaschinen-Welle (3) drehgelagerte Loszahnrad (23) der ersten Radebene (RE-V4) mit dem auf der Brennkraftmaschinen-Welle (3) drehgelagerten Loszahnrad (33) der dritten Radebene (RE-E3) gekuppelt ist.

12. Hybridantriebsstrang nach einem der vorhergehenden Ansprüche, **dadurch gekennzeichnet, dass** die Abtriebswelle (13) eine Ritzelwelle eines Achsdifferenzials (15) der Fahrzeugachse (VA) ist, und dass bei einem Allradantrieb das auf der Zwischenwelle (17) drehfest angeordnete Zahnrad (21) nicht nur mit dem auf der Abtriebswelle (13) drehfest angeordneten Zahnrad (19), sondern zusätzlich auch mit einem Festzahnrad (57) einer zur zweiten Fahrzeugachse (HA) führenden Kardanwelle (59) kämmt, und dass die Elektromaschinen-Welle (9) als eine auf der Kardanwelle (59) koaxial drehgelagerte Hohlwelle ausgeführt ist.

13. Hybridantriebsstrang nach einem der Ansprüche 6 bis 12, **dadurch gekennzeichnet, dass** zur Realisierung eines Rückwärtsgangs das Getriebe (1) einen, eine Rückwärtsgang-Radebene (RE-VR) bildenden Stirnradsatz aufweist, und dass die Rückwärtsgang-Radebene (RE-VR) ein auf der Brennkraftmaschinen-Welle (3) drehgelagertes Loszahnrad (41), das über ein sechstes Schaltelement (SE-R) mit der Brennkraftmaschinen-Welle (3) kuppelbar oder davon abkuppelbar ist, und ein damit kämmendes, auf der Elektromaschinen-Welle (9) drehgelagertes Loszahnrad (43) aufweist, das zusammen mit dem auf der Elektromaschinen-Welle (9) drehgelagerten Loszahnrad (31) der dritten Radebene (RE-E3) drehfest auf einer, auf der Elektromaschinen-Welle (9) koaxial drehgelagerten Hohlwelle (45) angeordnet ist, die über genau ein siebtes Schaltelement (K) mit der Elektromaschinen-Welle (9) kuppelbar oder davon abkuppelbar ist.

14. Hybridantriebsstrang nach Anspruch 13, **dadurch gekennzeichnet, dass** die Rückwärtsgang-Radebene (RE-VR) ein drehfest auf der Brennkraftmaschinen-Welle (3) angeordnetes Zahnrad (41) aufweist, das unter Zwischenschaltung eines Zwischenzahnrads (47) mit einem auf der Zwischenwelle (17) drehgelagerten Loszahnrad (49) kämmt, das über das dritte Schaltelement (SE-C) mit der auf der Zwischenwelle (17) drehgelagerten Hohlwelle (39) kuppelbar oder davon abkuppelbar ist.

15. Hybridantriebsstrang nach Anspruch 14, **dadurch gekennzeichnet, dass** das dritte Schaltelement (SE-C) beidseitig schaltbar ist sowie zwischen dem auf der Hohlwelle (39) drehfest angeordneten Loszahnrad (35) der vierten Radebene (RE-V5) und dem auf der Zwischenwelle (17) drehgelagerten Loszahnrad (49) der Rückwärtsgang-Radebene (RE-VR) angeordnet ist, und dass das dritte Schaltelement (SE-C) in einer ersten Schaltstellung die auf der Zwischenwelle (17) drehgelagerte Hohlwelle (39) mit dem auf der Zwischenwelle (17) drehgelagerten Loszahnrad (49) kuppelt, und in einer zweiten Schaltstellung die auf der Zwischenwelle (17) drehgelagerte Hohlwelle (39) mit der Zwischenwelle (17) kuppelt.

16. Hybridantriebsstrang nach einem der Ansprüche 4 bis 15, **dadurch gekennzeichnet, dass** zur Realisierung eines Rückwärtsgangs das Getriebe (1) eine zur Brennkraftmaschinen-Welle (3) achsparallele Rückwärtsgang-Welle (51) aufweist, auf der ein Loszahnrad (53) drehbar gelagert ist, das mit dem auf der Zwischenwelle (17) gelagerten Loszahnrad (27) der zweiten Radebene (RE-E1) kämmt und über ein sechstes Schaltelement (SE-R) mit der Rückwärtsgang-Welle (51) kuppelbar oder davon abkuppelbar ist, und dass auf der Rückwärtsgang-Welle (51) ein Festzahnrad (55) angeordnet ist, das mit dem Festzahnrad (19) der Abtriebswelle (13) kämmt.

17. Hybridantriebsstrang nach einem der Ansprüche 2 bis 16, **dadurch gekennzeichnet, dass** sämtliche genau vier Vorwärtsgang-Radebenen (RE-V4, RE-E1, RE-E3, RE-V5), in der Axialrichtung zwischen der Brennkraftmaschine (7) und der Elektromaschine (11) angeordnet sind.

18. Hybridantriebsstrang nach Anspruch 17, **dadurch gekennzeichnet, dass** die erste Radebene (RE-V4) auf der, der Brennkraftmaschine (7) zugewandten Getriebeseite angeordnet ist, und dass im weiteren Axialverlauf nacheinander die zweite Radebene (RE-E1), die dritte Radebene (RE-E3) und die vierte Radebene (RE-V5) folgen.

## Claims

1. Hybrid drive train for a hybrid-driven motor vehicle, having a transmission (1), which can be switched into different different transmission stages, which is drivingly connectable via an internal combustion engine shaft (3) to an internal combustion engine (7), via an electric machine shaft (9) to an electric machine (11) and via an output shaft (13) to at least one vehicle axle (VA), wherein the internal combustion engine shaft (3) and the electric machine shaft (9) are arranged to as to be axis-parallel to one another, wherein the transmission (1) is designed as a spur gear, in the case of which the internal combustion engine shaft (3), the electric machine shaft (9) and the output shaft (13) are drivingly connectable to one another via spur gear sets, which form wheel planes, which are switchable by means of the switching elements, wherein the transmission (1) has an intermediate shaft (17) arranged in an axis-parallel manner between the internal combustion engine shaft (3) and the electric machine shaft (9), wherein the intermediate shaft (17) is connectable to the driveshaft (13) via a gearwheel set forming a first wheel plane (RE-V4), wherein the first wheel plane (RE-V4) has a gearwheel (21) mounted non-rotationally on the intermediate shaft (17),
and wherein the first wheel plane (RE-V4) has a gearwheel (19) mounted non-rotationally on the output shaft (13) which meshes with the gearwheel (21) mounted non-rotationally on the intermediate shaft (17), **characterised in that** the first wheel plane (RE-V4) has a loose gearwheel (23), rotationally mounted on the internal combustion engine shaft (3), which meshes with the intermediate shaft gearwheel (21) and can be coupled with or decoupled from the internal combustion engine shaft (3) via a first switching element (SE-A) or a fifth switching element (SE-E).

2. Hybrid drive train according to claim 1, **characterised in that** the intermediate shaft (17) is connectable with the electric machine shaft (9) via a spur gear set forming a second wheel plane (RE-E1), and that the intermediate shaft (17) is connectable to the electric machine shaft (9) with a spur gear set forming a third wheel plane (RE-E3).

3. Drive train according to claim 1 or 2, **characterised in that** the intermediate shaft (17) is connectable to the internal combustion engine shaft (3) via a spur gear set forming a fourth wheel plane (RE-V5).

4. Hybrid drive train according to claim 2 or 3, **characterised in that** the second wheel plane (RE-E1) has a gearwheel (25) mounted non-rotationally on the electric machine shaft (9) and an intermediate shaft gearwheel (27), meshing therewith, which is connectable to the intermediate shaft (17) via a one-way clutch (F).

5. Hybrid drive train according to claim 4, **characterised in that** the one-way clutch (F) is assigned a fourth switching element (SE-D) which in a traction mode position permits a torque transmission from the electric machine (11) in the direction of the intermediate shaft (17) and prevents it in the opposite direction, in a traction/overrun mode position permits the transmission of torque in both directions and in a free-running position prevents the transmission of torque in both directions.

6. Hybrid drive train according to any of claims 2 to 5, **characterised in that** the third wheel plane (RE-E3) has a loose gearwheel (29), rotationally mounted on the intermediate shaft (17), which can be coupled to or decoupled from the intermediate shaft (17) via a third switching element (SE-C), and a loose gearwheel (31), rotationally mounted on the electric machine shaft (9), which can be coupled with or decoupled from the electric machine shaft (9) via a seventh switching element (K).

7. Hybrid drive train according to claim 6, **characterised in that** the third wheel plane (RE-E3) has a loose gearwheel (33), rotationally mounted on the internal combustion engine shaft (3), which can be coupled with or decoupled from the loose gearwheel (23) of the first wheel plane (RE-V4) which is mounted on the internal combustion engine shaft (3) and can be coupled with or decoupled from the internal combustion engine shaft (3) via a second switching element (SE-B).

8. Hybrid drive train according to any of claims 6 and 7, **characterised in that** the fourth wheel plane (RE-V5) has a loose gearwheel (35), mounted on the intermediate shaft (17), which can be coupled with or decoupled from the intermediate shaft (17) via the third switching element (SE-C), and has a loose gearwheel (37), meshing therewith, rotationally mounted on the internal combustion engine shaft (3), which can be coupled with or decoupled from the internal combustion engine shaft (3) via the second switching element (SE-B).

9. Hybrid drive train according to claim 8, **characterised in that** the second switching element (SE-B) is switchable on both sides and is arranged between the loose gearwheel (33) of the third wheel plane (RE-E3) which is rotationally mounted on the internal combustion engine shaft (3) and the looser gearwheel (37) of the fourth wheel plane (RE-V5), rotationally mounted on the internal combustion engine shaft (3), and that the second switching element (SE-B) in a first switching position couples to the internal combustion engine shaft (3) the loose gearwheel (33) of the third wheel plane (RE-E3), rotationally mounted on the internal combustion engine shaft (3), and in a second switching position couples to the internal combustion engine shaft (3) the loose gearwheel (37) of the fourth wheel plane (RE-V5), rotationally mounted on the internal combustion engine shaft (3).

10. Hybrid drive train according to claim 8 or 9, **characterised in that** the loose gearwheel (35) of the fourth wheel plane (RE-V5) mounted on the intermediate shaft (17) and the loose gearwheel (29) of the third wheel plane (RE-E3) mounted on the intermediate shaft (17) are arranged non-rotationally on a hollow shaft (39) which is rotationally mounted in a coaxial manner on the intermediate shaft (17) and by means of which precisely one third switching element (SE-C) can be coupled with or decoupled from the intermediate shaft (17).

11. Hybrid drive train according to claims 7 to 10, **characterised in that** the first switching element (SE-A) and the fifth switching element (SE-E) are combined to form a common switching element, in the first switching position of which the loose gearwheel (23) of the first wheel plane (RE-V4), rotationally mounted on the internal combustion engine shaft (3), is coupled to the internal combustion engine shaft (3), and in the second switching position of which the loose gearwheel (23) of the first wheel plane (RE-V4), rotationally mounted on the internal combustion engine shaft (3), is coupled to the loose gearwheel (33) of the third wheel plane (RE-E3), rotationally mounted on the internal combustion engine shaft (3).

12. Hybrid drive train according to any of the preceding claims, **characterised in that** the output shaft (13) is a pinion shaft of an axle differential (15) of the vehicle axle (VA) and that in the case of a four-wheel drive the gearwheel (21) mounted non-rotationally on the intermediate shaft (17) meshes not only with the gear wheel (13), but rather additionally also with a fixed gearwheel (57) of a Cardan shaft (59) leading to the second vehicle axle (HA), and that the electric machine shaft (9) is designed as a hollow shaft rotationally mounted in a coaxial manner on the Cardan shaft (59).

13. Hybrid drive train according to any of claims 6 to 12, **characterised in that** for realising a reverse gear, the transmission (1) has a spur gear set forming a reverse gear wheel plane (RE-VR), and that the reverse gear wheel plane (RE-VR) has a loose gearwheel (41) rotationally mounted on the internal combustion engine shaft (3) which can be coupled with or decoupled from the internal combustion engine shaft (3) via a sixth switching element (SE-R), and has a loose gearwheel (43) meshing therewith, rotationally mounted on the electric machine shaft (9), which is arranged, together with the loose gearwheel (31) of the third wheel plane (RE-E3), which is rotationally mounted on the electric machine shaft (9), in a non-rotational manner on a hollow shaft (45), rotationally mounted in a coaxial manner on the electric machine shaft (9), which can be coupled with or decoupled from the electric machine shaft (9) via precisely one seventh switching element (K).

14. Hybrid drive train according to claim 13, **characterised in that** the reverse gear wheel plane (RE-VR) has a gearwheel (41), arranged non-rotationally on the internal combustion engine shaft (3), which with the interposition of an intermediate gearwheel (47) meshes with a loose gearwheel (49), rotationally mounted on the intermediate shaft (17), which can be coupled with or decoupled from the hollow shaft (39) rotationally mounted on the intermediate shaft (17) via the third switching element (SE-C).

15. Hybrid drive train according to claim 14, **characterised in that** the third switching element (SE-C) is switchable on both sides and is arranged between the loose gearwheel (35) of the fourth wheel plane (RE-V5) which is non-rotationally mounted on the hollow shaft (39) and the loose gearwheel (49) of the reverse gear wheel plane (RE-VR) which is rotationally mounted on the intermediate shaft (17), and that the third switching element (SE-C) in a first switching position couples the hollow shaft (39) rotationally mounted on the intermediate shaft (17) with the loose gearwheel (49) rotationally mounted on the intermediate shaft (17), and in a second switching position couples with the intermediate shaft (17) the hollow shaft (39) rotationally mounted on the intermediate shaft (17).

16. Hybrid drive train according to any of claims 4 to 15, **characterised in that** for realising a reverse gear, the transmission (1) has a reverse gear shaft (51), which is axis-parallel to the internal combustion engine shaft (3), on which is rotationally mounted a loose gearwheel (53) which meshes with the loose gearwheel (27) of the second wheel plane (RE-E1) which is mounted on the intermediate shaft (17) and can be coupled with or decoupled from the reverse gear shaft (51) via a sixth switching element (SE-R), and that on the reverse gear shaft (51) is arranged a fixed gearwheel (55) which meshes with the fixed gearwheel (19) of the output shaft (13).

17. Hybrid drive train according to any of claims 2 to 16, **characterised in that** all precisely four forwards gear wheel planes (RE-V4, RE-E1, RE-E3, RE-V5) are arranged in axial direction between the internal combustion engine (7) and the electric machine (11).

18. Hybrid drive train according to claim 17, **characterised in that** the first wheel plane (RE-V4) is arranged on the transmission side facing the internal combustion engine (7) and that in the further axial course the second wheel plane (RE-E1), the third wheel plane (RE-E3) and the fourth wheel plane (RE-V5) follow one after another.

## Revendications

1. Chaîne cinématique hybride pour un véhicule automobile à propulsion hybride, avec une boîte de vitesses (1) pouvant être commutée dans différents étages de rapport de transmission au moyen d'éléments de commutation, qui peut être reliée par un arbre de moteur à combustion interne (3) à un moteur à combustion interne (7), à une machine électrique (11) par l'intermédiaire d'un arbre de machine électrique (9) ainsi qu'à au moins un essieu de véhicule (VA) par l'intermédiaire d'un arbre de sortie (13), dans laquelle l'arbre de moteur à combustion interne (3) et l'arbre de machine électrique (9) sont disposés parallèlement l'un à l'autre, dans laquelle la boîte de vitesses (1) est réalisée en tant qu'engrenage droit, auquel l'arbre de moteur à combustion interne (3), l'arbre de machine électrique (9) et l'arbre de sortie (13) peuvent être reliés entre eux en entraînement par l'intermédiaire de jeux de pignons droits formant des plans de roue, qui peuvent être commutés au moyen des éléments de commutation, dans laquelle la boîte de vitesses (1) présente un arbre intermédiaire (17) disposé parallèlement à l'axe entre l'arbre de moteur à combustion interne (3) et l'arbre de machine électrique (9), dans laquelle l'arbre intermédiaire (17) put être relié à l'arbre de sortie (13) par l'intermédiaire d'un jeu de pignons droits formant un premier plan de roue (RE-V4), dans laquelle le premier plan de roue (RE-V4) présente un pignon (21) monté de manière non rotative sur l'arbre intermédiaire (17),
et dans laquelle le premier plan de roue (RE-V4) présente un pignon (19) monté de manière non rotative sur l'arbre de sortie (13), qui s'engrène avec le pignon (21) monté de manière non rotative sur l'arbre intermédiaire (17), **caractérisé en ce que** le premier plan de roue (RE-V4) présente un pignon libre (23) monté en rotation sur l'arbre de moteur à combustion interne (3), qui s'engrène avec le pignon d'arbre intermédiaire (21) et qui peut être couplé à l'arbre de moteur à combustion interne (3) ou en être découplé par l'intermédiaire d'un premier élément de commutation (SE-A) ou d'un cinquième élément de commutation (SE-E).

2. Chaîne cinématique hybride selon la revendication 1, **caractérisée en ce que** l'arbre intermédiaire (17) peut être relié à l'arbre de machine électrique (9) par l'intermédiaire d'un jeu de pignons droits formant un deuxième plan de roue (RE-E1), et **en ce que** l'arbre intermédiaire (17) peut être relié à l'arbre de machine électrique (9) par l'intermédiaire d'un jeu de pignons droits formant un troisième plan de roue (RE-E3).

3. Chaîne cinématique hybride selon la revendication 1 ou 2, **caractérisée en ce que** l'arbre intermédiaire (17) peut être relié à l'arbre de moteur à combustion interne (3) par un jeu de pignons droits formant un quatrième plan de roue (RE-V5).

4. Chaîne cinématique hybride selon la revendication 2 ou 3, **caractérisée en ce que** le deuxième plan de roue (RE-E1) présente un pignon (25) monté de manière non rotative sur l'arbre de machine électrique (9) et un pignon d'arbre intermédiaire (27) s'engrenant avec celle-ci, qui peut être relié à l'arbre intermédiaire (17) par l'intermédiaire d'un accouplement de roue libre (F).

5. Chaîne cinématique hybride selon la revendication 4, **caractérisée en ce qu'**un quatrième élément de commutation (SE-D) est associé à l'accouplement de roue libre (F) qui, dans une position de fonctionnement en traction, autorise une transmission de couple de la machine électrique (11) en direction de l'arbre intermédiaire (17) et l'empêche dans le sens inverse, autorise dans une position de fonctionnement en traction/poussée la transmission de couple dans les deux sens et empêche dans une position de fonctionnement en roue libre la transmission de couple dans les deux sens.

6. Chaîne cinématique hybride selon l'une quelconque des revendications 2 à 5, **caractérisée en ce que** le troisième plan de roue (RE-E3) présente un pignon libre (29) monté en rotation sur l'arbre intermédiaire (17) et pouvant être couplé à l'arbre intermédiaire (17) ou découplé de celui-ci par l'intermédiaire d'un troisième élément de commutation (SE-C), et un pignon libre (31) s'engrenant avec celui-ci, monté en rotation sur l'arbre de machine électrique (9), qui peut être couplé à l'arbre de machine électrique (9) ou en être découplé par l'intermédiaire d'un septième élément de commutation (K).

7. Chaîne cinématique hybride selon la revendication 6, **caractérisée en ce que** le troisième plan de roue (RE-E3) présente un pignon libre (33) monté en rotation sur l'arbre de moteur à combustion interne (3), qui peut être couplé ou découplé du pignon libre (23) du premier plan de roue (RE-V4) monté sur l'arbre de moteur à combustion interne (3) par l'intermédiaire d'un premier élément de commutation (SE-A) et qui peut être couplé ou découplé de l'arbre de moteur à combustion interne (3) par l'intermédiaire d'un deuxième élément de commutation (SE-B).

8. Chaîne cinématique hybride selon l'une quelconque des revendications 6 et 7, **caractérisée en ce que** le quatrième plan de roue (RE-V5) présente un pignon libre (35) monté sur l'arbre intermédiaire (17) et pouvant être couplé à l'arbre intermédiaire (17) ou découplé de celui-ci par l'intermédiaire du troisième élément de commutation (SE-C), et un pignon libre (37) s'engrenant avec celui-ci, monté en rotation sur l'arbre de moteur à combustion interne (3), qui peut être couplé à l'arbre de moteur à combustion interne (3) ou en être découplé par l'intermédiaire du deuxième élément de commutation (SE-B).

9. Chaîne cinématique hybride selon la revendication 8, **caractérisée en ce que** le deuxième élément de commutation (SE-B) peut être commuté des deux côtés et est disposé entre le pignon libre (33) du troisième plan de roue (RE-E3), monté en rotation sur l'arbre de moteur à combustion interne (3), et le pignon libre (37) du quatrième plan de roue (RE-V5), monté en rotation sur l'arbre de moteur à combustion interne (3), et **en ce que** le deuxième élément de commutation (SE-B) couple dans une première position de commutation le pignon libre (33) du troisième plan de roue (RE-E3), monté en rotation sur l'arbre de moteur à combustion interne (3), à l'arbre de moteur à combustion interne (3) et couple dans une deuxième position de commutation le pignon libre (37) du quatrième plan de roue (RE-V5), monté en rotation sur l'arbre de moteur à combustion interne (3), à l'arbre de moteur à combustion interne (3).

10. Chaîne cinématique hybride selon la revendication 8 ou 9, **caractérisée en ce que** le pignon libre (35) du quatrième plan de roue (RE-V5), monté sur l'arbre intermédiaire (17), et le pignon libre (29) du troisième plan de roue (RE-E3), monté sur l'arbre intermédiaire (17), sont disposés de manière non rotative sur un arbre creux (39), qui est monté coaxialement en rotation sur l'arbre intermédiaire (17) et qui peut être couplé à l'arbre intermédiaire (17) ou découplé de celui-ci par l'intermédiaire de l'exactement un troisième élément de commutation (SE-C).

11. Chaîne cinématique hybride selon les revendications 7 à 10, **caractérisée en ce que** le premier élément de commutation (SE-A) et le cinquième élément de commutation (SE-E) sont réunis en un élément de commutation commun, dans la première position de commutation duquel le pignon libre (23) du premier plan de roue (RE-V4), monté en rotation sur l'arbre de moteur à combustion interne (3), est couplé à l'arbre de moteur à combustion interne (3), et dans sa deuxième position de commutation, le pignon libre (23) du premier plan de roue (RE-V4), monté en rotation sur l'arbre de moteur à combustion interne (3), est couplé au pignon libre (33) du troisième plan de roue (RE-E3), monté en rotation sur l'arbre de moteur à combustion interne (3).

12. Chaîne cinématique hybride selon l'une quelconque des revendications précédentes, **caractérisée en ce que** l'arbre de sortie (13) est un arbre de pignon d'un différentiel d'essieu (15) de l'essieu de véhicule (VA) et **en ce que**, dans le cas d'une transmission intégrale, le pignon (21) monté de manière non rotative sur l'arbre intermédiaire (17) n'est pas seulement couplé au pignon (19) monté de manière non rotative sur l'arbre de sortie (13), mais en plus avec un pignon fixe (57) d'un arbre à cardan (59) menant au deuxième essieu de véhicule (HA), et **en ce que** l'arbre de machine électrique (9) est réalisé en tant qu'arbre creux monté en rotation coaxiale sur l'arbre à cardan (59).

13. Chaîne cinématique hybride selon l'une quelconque des revendications 6 à 12, **caractérisée en ce que,** pour réaliser une marche arrière, la boîte de vitesses (1) présente un jeu de pignons droits formant un plan de roue de marche arrière (RE-VR), et **en ce que** le plan de roue de marche arrière (RE-VR) présente un pignon libre (41) monté en rotation sur l'arbre de moteur à combustion interne (3), qui peut être couplé à l'arbre de moteur à combustion interne (3) ou en être découplé par l'intermédiaire d'un sixième élément de commutation (SE-R), et un pignon libre (43) s'engrenant avec celui-ci et monté en rotation sur l'arbre de machine électrique (9), qui est disposé de manière non rotative avec le pignon libre (31) du troisième plan de roue (RE-E3) monté en rotation sur l'arbre de machine électrique (9) sur un arbre creux (45), monté coaxialement en rotation sur l'arbre de machine électrique (9), qui peut être couplé à l'arbre de machine électrique (9) ou en être découplé par l'intermédiaire d'exactement un septième élément de commutation (K).

14. Chaîne cinématique hybride selon la revendication 13, **caractérisée en ce que** le plan de roue de marche arrière (RE-VR) présente un pignon (41) disposé de manière non rotative sur l'arbre de moteur à combustion interne (3), qui s'engrène, avec interposition d'un pignon intermédiaire (47), avec un pignon libre (49) monté en rotation sur l'arbre intermédiaire (17), qui peut être couplé à l'arbre creux (39) monté en rotation sur l'arbre intermédiaire (17) ou en être découplé par l'intermédiaire du troisième élément de commutation (SE-C).

15. Chaîne cinématique hybride selon la revendication 14, **caractérisée en ce que** le troisième élément de commutation (SE-C) peut être commuté des deux côtés et est disposé entre le pignon libre (35) du quatrième plan de roue (RE-V5), disposé de manière non rotative sur l'arbre creux (39), et le pignon libre (49) du plan de roue de marche arrière (RE-VR), monté en rotation sur l'arbre intermédiaire (17), et **en ce que** le troisième élément de commutation (SE-C) couple dans une première position de commutation l'arbre creux (39) monté en rotation sur l'arbre intermédiaire (17) avec le pignon libre (49) monté en rotation sur l'arbre intermédiaire (17) et couple dans une deuxième position de commutation l'arbre creux (39) monté en rotation sur l'arbre intermédiaire (17) avec l'arbre intermédiaire (17).

16. Chaîne cinématique hybride selon l'une quelconque des revendications 4 à 15, **caractérisée en ce que** pour réaliser une marche arrière, la boîte de vitesses (1) présente un arbre de marche arrière (51) parallèle à l'axe de l'arbre de moteur à combustion interne (3), sur lequel un pignon libre (53) est monté de manière rotative, qui s'engrène avec le pignon libre (27) du deuxième plan de roue (RE-E1) monté sur l'arbre intermédiaire (17) et qui peut être couplé à l'arbre de marche arrière (51) ou en être découplé par l'intermédiaire d'un sixième élément de commutation (SE-R), et **en ce qu'**un pignon fixe (55) est disposé sur l'arbre de marche arrière (51), qui s'engrène avec le pignon fixe (19) de l'arbre de sortie (13).

17. Chaîne de traction hybride selon l'une quelconque des revendications 2 à 16, **caractérisée en ce que** l'ensemble des quatre plans de roue de marche avant (RE-V4, RE-E1, RE-E3, RE-V5) sont disposés dans la direction axiale entre le moteur à combustion interne (7) et la machine électrique (11).

18. Chaîne cinématique hybride selon la revendication 17, **caractérisée en ce que** le premier plan de roue (RE-V4) est disposé sur le côté boîte de vitesses tourné vers le moteur à combustion interne (7), et **en ce que** le deuxième plan de roue (RE-E1), le troisième plan de roue (RE-E3) et le quatrième plan de roue (RE-V5) se succèdent dans la suite du parcours axial.
